Europäisches Patentamt

European Patent Office

Office européen des brevets

(19)

(11) Publication number : **0 062 531 B2**

(12) # NEW EUROPEAN PATENT SPECIFICATION

(45) Date of publication of the new patent specification : **11.11.92 Bulletin 92/46**

(51) Int. Cl.⁵ : **G01F 1/58**

(21) Application number : **82301803.1**

(22) Date of filing : **06.04.82**

(54) **Electromagnetic flow meter.**

(30) Priority : **07.04.81 JP 49837/81**

(43) Date of publication of application :
**13.10.82 Bulletin 82/41**

(45) Publication of the grant of the patent :
**20.08.86 Bulletin 86/34**

(45) Mention of the opposition decision :
**11.11.92 Bulletin 92/46**

(84) Designated Contracting States :
**DE FR GB NL**

(56) References cited :
**DE-A- 2 701 184**
**DE-B- 2 244 677**
**JP-A-55 336 815**

(56) References cited :
**US-A- 4 167 871**
**US-A- 4 210 022**
**Siemens Zeitschrift 50 (1976) No. 6, pp.**
**415-417, "Zählwerterfassungssystem ZW**
**531", Görtz and Schmöe**

(73) Proprietor : **Aichi Tokei Denki Co., Ltd.**
**2-70, Chitose 1-chome**
**Atsuta-ku, Nagoya (JP)**

(72) Inventor : **Mochizuki, Tsutomu c/o Aichi Tokei**
**Denki Co., Ltd.**
**2-70, Chitose-1-chome**
**Atsuta-ku Nagoya (JP)**

(74) Representative : **Blanco White, Henry Nicholas**
**et al**
**ABEL & IMRAY Northumberland House**
**303-306 High Holborn**
**London WC1V 7LH (GB)**

EP 0 062 531 B2

## Description

The present invention relates to an electromagnetic flow meter and more particularly to an improvement in the electromagnetic flow meter.

In general, the electromagnetic flow meter comprises a pair of opposite electrodes between which at least part of an electrically conductive fluid flows in contact with the electrodes, a magnetic circuit for producing a magnetic flux crossing a portion at which both a straight line connecting the electrodes and the flow of the fluid intersect, and means for calculating a fluid flow velocity from a voltage produced between the electrodes by the magnetic flux supplied from the magnetic circuit and the fluid flow.

The electromagnetic flow meter of this kind, in general, guarantees a precision of not lower than 1% when a full scale is selected to be a value between 1 m/s and 10 m/s, and the practical range of measurement is up to 1/20 of a full scale (the maximum current flow).

For example, an electromagnetic flow meter of 100 mm caliber type can select any maximum flow scale within the range from 25 m³/h to 250 m³/h, and practically measure values in range from 1/20 of 25 m³/h, or 1.25 m³/h to 250 m³/h, that is over a wide range of about 200 times the minimum value with substantially good precision. However, when the maximum flow is selected to be 100 m³/h, the practical range of measurement is from 5 m³/h to 100 m³/h, or 1/10 the 200-times range. This is due to the fact that the electromagnetic flow meters used so far produce analog instantaneous amount of flow.

In order to solve this problem, an automatic range mechanism has been proposed. This type of a flow meter, for example, produces analog output of 4 mA to 20 mA for the instantaneous flow amount of 0 to 100 m³/h of full scale. For an amount of flow below 50 m³/h, or the half of the full scale, the ranges of measurement are automatically switched, and for an instantaneous amount of flow within the range from 0 to 50 m³/h of full scale, it produces analog output of 4 mA to 20 mA, thus the ranges of measurement being automatically switched over in two steps.

In this case, for two values of flow, 50 m³/h and 100 m³/h, the output signals are the same, 20 mA. However, since the weighting for the flow values must be different, it is necessary to discriminate therebetween at the receiver. To do this, a signal line other than the two transmission lines on which signals of 4 mA to 20 mA are sent is required. Moreover, different flow meters of the same caliber have at the receiver different types of accumulators and scale plates for different maximum flow amounts, and therefore the types of receivers cannot be standardized.

US-A-4 167 871 discloses a bi-directional electromagnetic flowmeter constituted by a flowmeter primary including a flow tube having a pair of electrodes mounted at diametrically-opposed positions and an electromagnetic coil excited by a d.c. voltage that is periodically interrupted at a low-frequency rate to produce a magnetic field in the flow tube, the voltage induced in the fluid passing through the tube and intersecting the field being transferred to the electrodes to produce a flow-induced signal whose sense changes with the direction of flow. The secondary or converter of the flowmeter includes demodulator means to convert the flow-induced electrode signal into a d.c. signal the magnitude and polarity of which are a function of flow rate and the polarity of which depends on the sense of the electrode signal. The d.c. signal is translated by a d.c.-to-duty cycle circuit into variable frequency pulses which are sampled and fed back through a feedback loop to one input of a summing junction to which the electrode signal is also applied as a second input, the output of the junction being fed to the demodulator means.

JP-A-55-33685, on which the preamble of claim 1 is based, discloses an electromagnetic flowmeter comprising a transmitter including electromagnetic measuring means that comprises a non-magnetic and electrically nonconductive tube path, through which an electrically conductive fluid flows in use, a pair of electrodes disposed, in use, in contact with the fluid in said tube path and arranged opposite to each other in such a way that a line connecting the electrodes intersects the fluid flow, an exciting coil for establishing magnetic flux at a portion where the fluid and the line connecting the electrodes intersect each other, an exciting circuit for supplying an exciting current to said exciting coil in forward and backward directions, thereby permitting an electromotive force proportional to the magnetic flux thus generated and to the velocity of the fluid flow to be induced between said electrodes, a first differential amplifier for amplifying the electromotive force induced between said electrodes and a sampling circuit for sampling the output voltage of said first differential amplifier and converting only the output voltage proportional to the fluid flow velocity to a dc voltage, for producing an instantaneous fluid flow velocity signal; a control circuit for supplying timing pulses to said exciting circuit and said sampling circuit; and a voltage regulator for stabilising the voltage supplied from said receiver; a receiver, comprising an electric power supply for supplying the electric power to said transmitter; and two transmission lines through which said transmitter is supplied with electric power from said receiver and an electrical signal from said transmitter is transmitted to said receiver.

Siemens Zeitschrift 50(1976) Heft 6 pages 415-417 discloses accumulation of pulses from a measurement transducer, e.g. from a flowmeter, and transmission of the accumulated pulses by digital coding techniques.

DE-A-22 44 677 discloses a measuring system in which amplitude signals representing a mechanical quantity are converted to coded form and transmitted over two lines to a receiver, the transmitter being powered from the receiver over the same two lines.

An object of the present invention is to provide an electromagnetic flow meter with two transmission lines in which drawback of the prior art are abviated, and which is capable of measuring a wider ange of flow rate with substantially good precision.

The present invention provides an electromagnetic flowmeter as recited in the paragraph above referring to JP-A-55 33685, characterised in that the said exciting circuit in operation supplies the said exciting current in the said forward and backward directions alternately; and in that the said transmitter includes an A/D converter for converting the output voltage from said sampling circuit to a number of pulses proportional to the fluid flow velocity, to which the control circuit provides timing pulses; and accumulating means for integrating the instantaneous fluid flow velocity value signal and for transforming the thus obtained integrated value into the form of a digitally coded current corresponding to the electrical signal, wherein

said accumulating means comprises an accumulating counter and a code converter circuit;

and that said transmitter comrises a base current setting circuit for generating and controlling the digitally coded current in accordance with the output of the code converter circuit;

a voltage dividing circuit for supplying a neutral point voltage to said differential amplifier, said sampling circuit and said A/D converter;

and an internal power circuit means for causing said transmitter to continue the measurement of the amount of fluid flow when the electric power to said receiver is cut off; and wherein the receiver comprises resistance means for converting the digitally coded current to a coded voltage; a second differential amplifier for amplifying said coded voltage; a receiver converter circuit for taking out only the accumulated data from the output voltage from said second differential amplifier and storing it; an accumulating indicator for displaying said accumulated data in a digital form; an instantaneous fluid flow amount indicator for subtracting the accumulated data from the preceding accumulated data in said receiver converter circuit, converting the result to a digital instantaneous fluid flow amount and then displaying the digital instantaneous fluid flow amount; and a D/A converter for converting said digital instantaneous fluid flow amount to an analog current signal and sending it to an external instrument.

Ways of carrying out the invention are described in detail below with reference to drawings which illustrate several specific embodiments, in which:

Fig. 1 is a block diagram of a transmitter of an electromagnetic flow meter according to the present invention;

Fig. 2 is a block diagram of a receiver of the electromagnetic flow meter according to the present invention;

Fig. 3 is a circuit diagram of a sampling circuit including a switch circuit for reversing polarity upon reverse of fluid flow and used in the present invention;

Figs. 4A and 4B are timing charts useful for explaining the operation of the sampling circuit as shown in Fig. 3;

Fig. 5 is an explanatory diagram useful for explaining the circuit operation such as voltage at each portion of the sampling circuit upon reverse of fluid flow as shown in Fig. 3;

Fig. 6 is a circuit diagram of another sampling circuit having a different polarity-reversing switch circuit from that of Fig. 3, according to the present invention;

Fig. 7 is a timing chart useful for explaining the operation of the polarity-reversing switch circuit of the sampling circuit as shown in Fig. 6;

Fig. 8 is an explanatory diagram useful for explaining the circuit operation such as a voltage at each portion of the sampling circuit as shown in Fig. 6, upon reverse of fluid flow;

Fig. 9 is an explanatory diagram showing one example of a transmission format according to the present invention for successively transmitting a non-inverted code and its inverted code signal;

Fig. 10 is a circuit diagram of an example of a base current setting circuit according to the present invention;

Fig. 11 is a circuit diagram of another example of a battery back-up circuit according to the present invention; and

Fig. 12 is an explanatory diagram showing another example of a transmission format according to the present invention which includes a parity check code.

Some embodiments of the present invention will hereinafter be described with reference to the accompanying drawings.

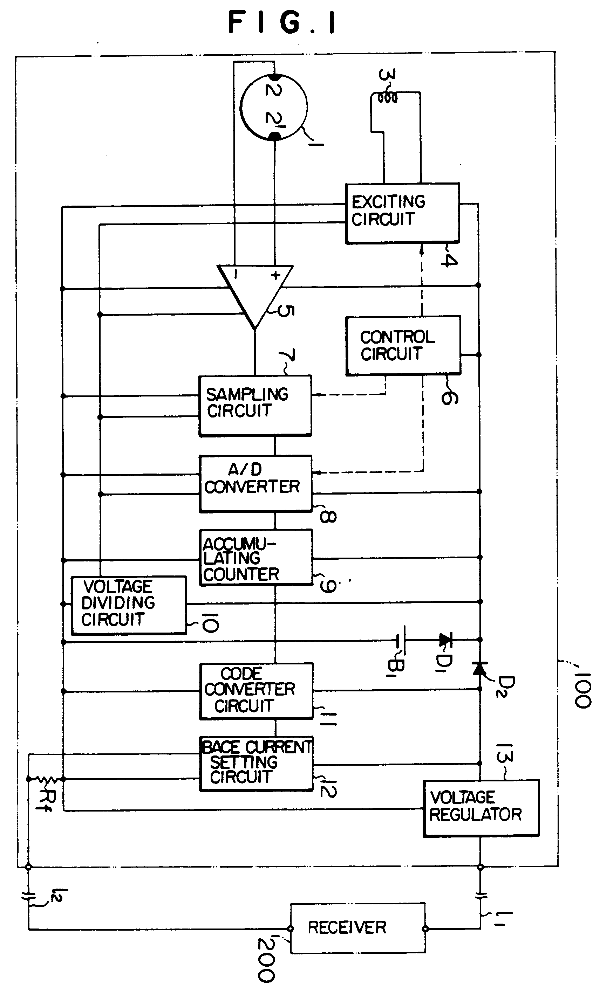

Referring to Fig. 1, there is shown a transmitter 100 of an electromagnetic flow meter, which is connected to a receiver 200 by two transmission lines $l_1$ and $l_2$. Reference numeral 1 denotes a non-magnetic and electrically nonconductive tube in which an electrically conductive fluid flows. When an exciting current changing in alternately forward and backward directions is supplied to an exciting coil 3 from an exciting circuit 4, an electromotive force is induced in proportion to the caused magnetic flux and the velocity of the fluid flowing in the tube, between electrodes 2 and 2', and amplified by a differential amplifier 5. This induced voltage includes a spike voltage generated when the exciting current is in a transient state, but only the voltage proportional to the amount of flow is taken out by a sampling circuit 7 and converted to a *dc* voltage. Reference numeral 6 denotes a control circuit 6 for supplying timing pulses for excitation and sampling to the exciting circuit 4 and a sampling circuit 7, respectively. The output voltage from the sampling circuit 7 is converted by an A/D (analog to digital) converter 8 to the number of pulses proportional to an amount of fluid flow, which is counted by an accumulating or integrating counter 9 and then converted to a serial code by a code converter circuit 11. A base current setting circuit 12, when the output of the code converter circuit 11 is a low level, controls to maintain the whole consumption current, or the current flowing through a resistance $R_f$ at a constant base current, for example, 4 mA, and when the output of the code converter circuit 11 is of a high level, it controls to maintain the current, for example, at 10 mA. The current flowing through the resistance $R_f$ is substantially the same as that flowing in the transmission lines $I_1 1$ and $I_2$. A voltage regulator 13 serves to stabilize the voltage which is to be supplied from the receiver 200 through the two transmission lines $I_1$ and $I_2$ to the electromagnetic flow meter, and then supply the stabilized voltage direct to the circuits 11 and 12 and via a diode $D_2$ to the circuits 4 to 10. At that time, the diode $D_1$ is reverse-biased.

When the receiver 200 is inoperative because of a stoppage in power supply, the diode $D_1$ is forward-biased, and the diode $D_2$ reverse-biased. Consequently, only the circuits 4 to 10 for measuring and accumulative counting of the electromagnetic flow meter can be supplied with voltage from a battery $B_1$. The voltage dividing circuit 10 functions to make a neutral point voltage required by such circuits operating on positive and negative power supply voltages as the differential amplifier 5, sampling circuit 7 and A/D converter 8.

Since the consumption current in the electromagnetic flow meter 100 is usually supplied from the receiver 200 via the transmission lines $I_1$ and $I_2$, it is necessary to reduce the constant base current down to 4 mA or below and therefore it is desirable to reduce the consumption current by using a C-MOS IC for a digital circuit such as the accumulating counter 9 and code converter circuit 11. Moreover, in order to reduce the consumption current in the electromagnetic flow meter, other known methods may be used.

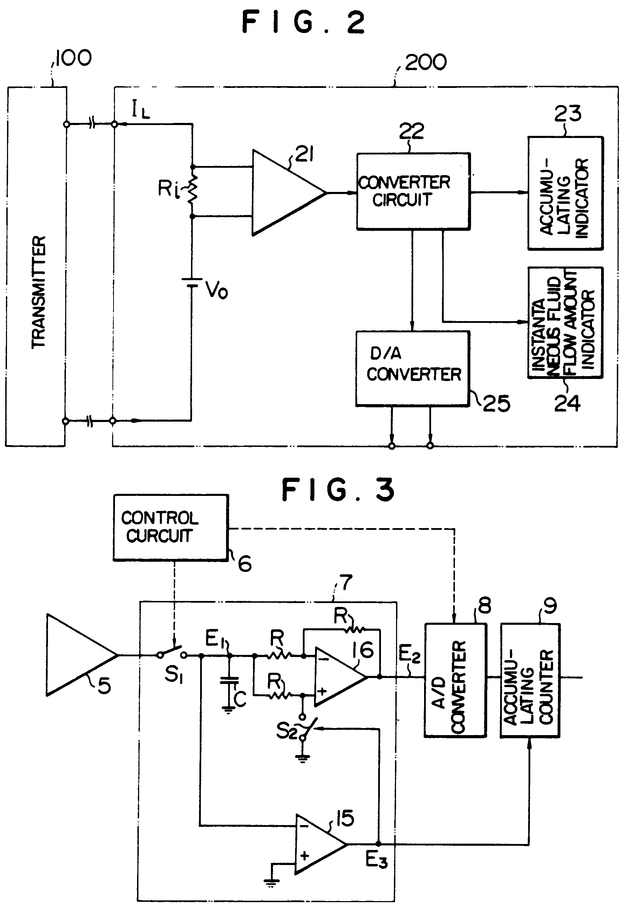

Fig. 2 is a block diagram of the receiver 200. A power supply $V_o$ is a power supply for supplying an electric power to the transmitter 100. A current $I_L$ modulated in the transmitter 100 to a code in accordance with an amount of fluid flow flows through a resistance $R_i$ in the receiver 200. The code-modulated current $I_L$ is converted at the resistance $R_i$ to a code-modulated voltage, which is amplified by a differential amplifier 21 and then applied to a converter circuit 22, where only integrated data is taken out from the current $I_L$ and stored. This accumulated data is displayed in a digital manner on an integration indicator 23, and at the same time, it is subtracted from the preceding integrated data at the converter circuit 22 and converted to a digital instantaneous amount of fluid flow, which is displayed in a digital form on an instantaneous flow indicator 24. The digital instantaneous amount of flow from the converter circuit 22 can be converted by a D/A converter 25 to an analog current signal of 4 mA to 20 mA or an analog voltage signal of 1 volt to 5 volts, which is then transferred to another instrument. In that case, the range of analog signal may be automatically or manually set up by user. The receiver 200 is installed in a control room or the like and it is connected to the transmitter 100 by two-line system of a long distance.

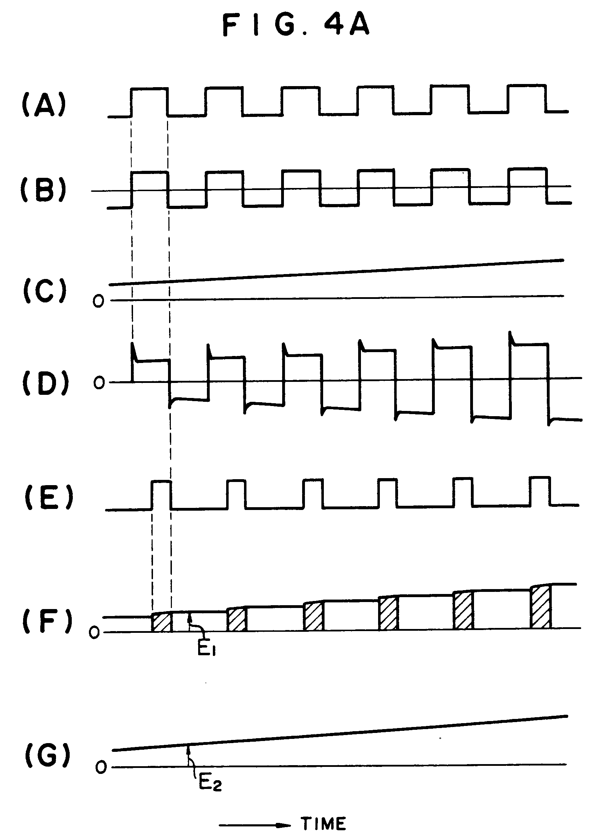

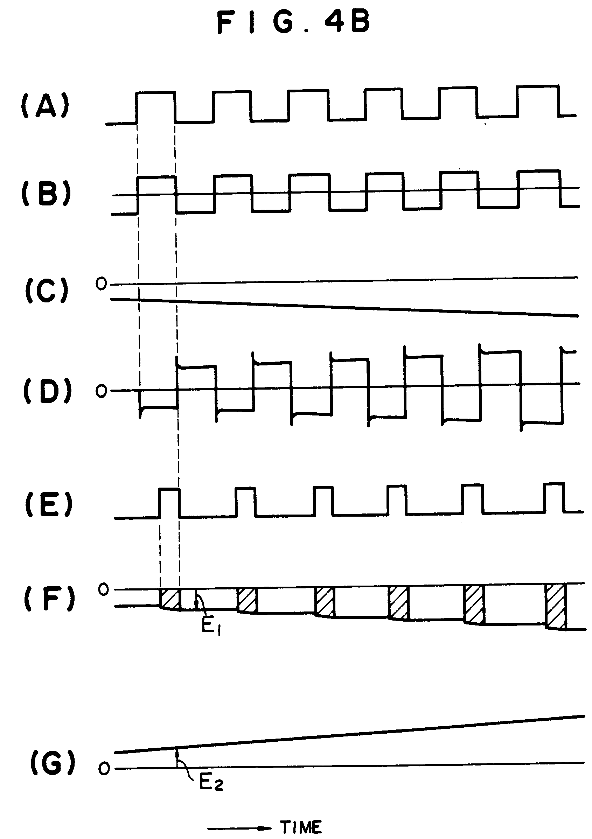

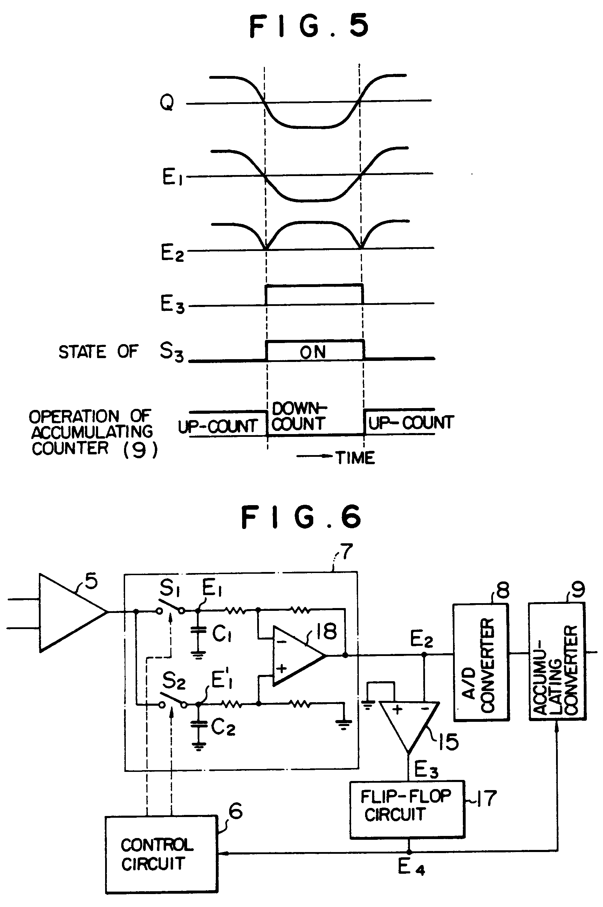

Fig. 3 shows one embodiment of a sampling circuit for use in the present invention. The operation of the sampling circuit 7 will hereinafter be described with reference to Figs. 4A, 4B and 5. When a fluid flows in the tube 1 in one direction, the exciting circuit 4 is supplied with a timing pulse as shown by (A) of Fig. 4A, from the control circuit 6 so as to supply an exciting current to the exciting coil 3 in alternately forward and backward directions. Thus, the magnetic flux having a flux density changed as shown by (B) of Fig. 4 is established to cross the fluid as lying on the line connecting the electrodes 2 and 2′. As a result, when the fluid flow velocity is increased as shown by (C) of Fig. 4A, a voltage having a waveform as shown by (D) of Fig. 4A is generated between the electrodes 2 and 2′. The voltage is amplified by the differential amplifier 5 and then transferred to the sampling circuit 7. The sampling circuit 7 has a switch $S_1$ opened and closed by a sampling pulse from the control circuit as shown by (E) of Fig. 4A to sample the output of the differential amplifier 5 and hold it in a capacitor C. When the voltage $E_1$ across the capacitor C is a positive voltage as shown by (F) of Fig. 4A, an output voltage $E_3$ from a comparator 15 is of a low level to keep a switch $S_2$ in the open state, and thus the output voltage $E_2$ from the sampling circuit 7 is as shown by (G) of Fig. 4A.

On the other hand, when the direction in which the fluid flows is reversed, the sampling circuit 7 as shown in Fig. 3 operates as follows. Since the signals shown by (A), (B) and (E) of Fig. 4B are the same as those in Fig. 4A, they will not be described here. (C) of Fig. 4B shows the fluid flow velocity in the case where the fluid flow is reversed in its flow direction to the above case. Since the voltage generated between the electrodes 2 and 2′ is reversed as shown by (D) of Fig. 4B, the voltage held in the capacitor C is as shown by (F) of Fig. 4B. In that case, the output voltage $E_3$ from the comparator 15 becomes a high level to make the switch $S_2$ in the closed state, thus an operational amplifier 16 serving as an inverting circuit with an amplification factor of 1.0. Consequently, the output voltage $E_2$ from the sampling circuit 7 is kept at the positive polarity as shown by (G) of Fig. 4B and at the same time the accumulating counter 9 starts down-counting by the high-level output voltage $E_3$ from the comparator 15 as shown in Fig. 5 to subtract the reversed amount of fluid flow from the previous accumulated value. The amount of fluid flow Q and the voltage at each point in the sampling circuit 7 shown in Fig. 3 are as shown in Fig. 5.

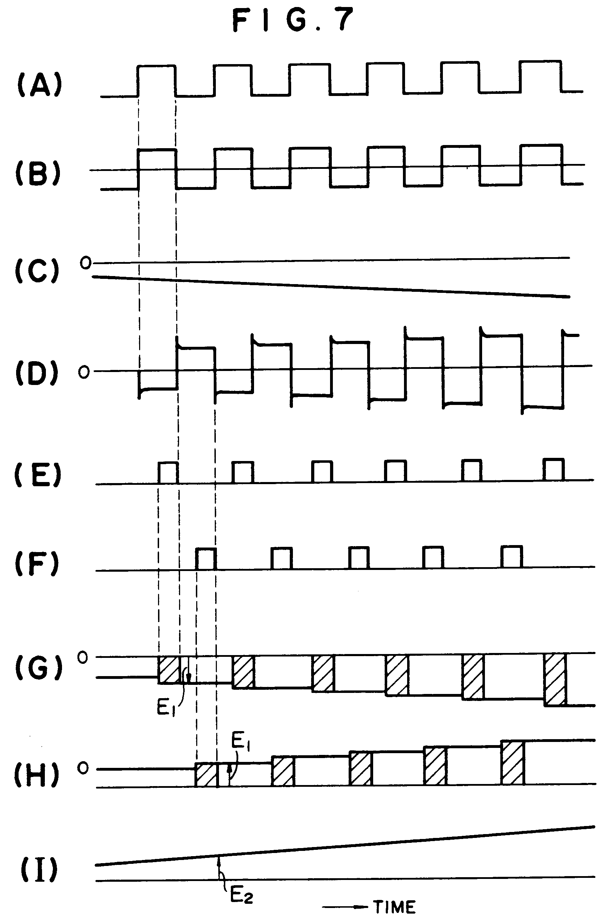

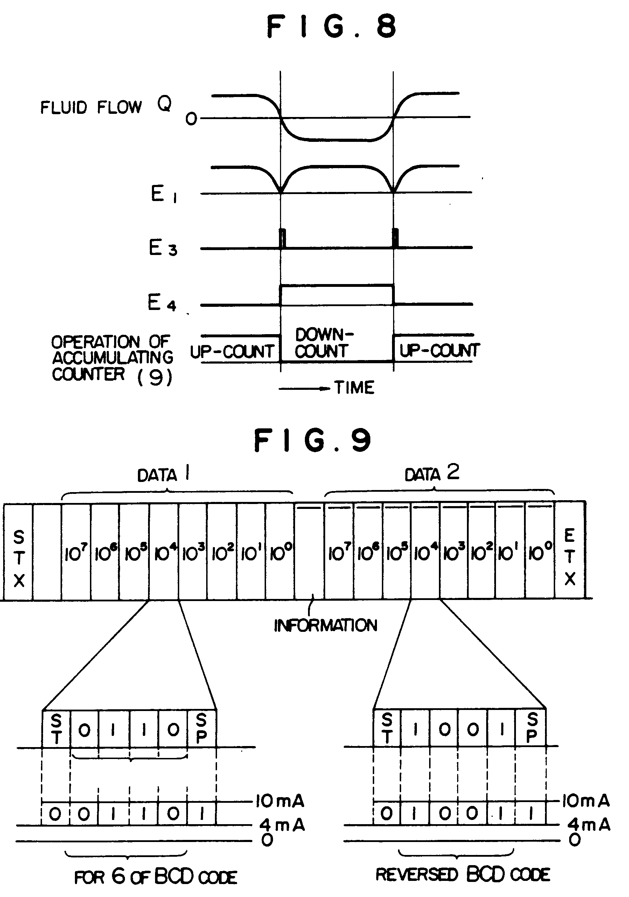

Another embodiment of the sampling circuit with a different polarity-reversing switch circuit will be described as to the case of reverse flow of a fluid with reference to Figs. 6, 7 and 8. When the output voltage $E_2$ from the sampling circuit 7 as shown in Fig. 6 goes to the negative polarity upon reverse of fluid flow, this fact is discriminated by the comparator 15, and the high-level output voltage $E_3$ is applied to the flip-flop circuit 17. As a result, the output voltage $E_4$ from the flip-flop circuit 17 is reversed and latched. The reversing of the output voltage $E_4$ makes the switches $S_1$, $S_2$ in the closed state while reversing the timing of the switch actuating pulses with respect to the timing of the switch actuating pulses before the reversing, the output voltage $E_2$ from the sampling circuit 7 is reversed to have again positive polarity with the result that the output voltage $E_3$ from the comparator 15 is returned to a low level, but the output voltage $E_4$ of the flip-flop circuit 17 remains unchanged. At the same time, the accumulating counter 9 is switched from up-counting to downcounting operating by the output voltage $E_4$ from the flip-flop circuit 17. The operation at that time is described in Fig. 8. Fig. 7 shows the voltage waveform at each point in the circuit shown in Fig. 6. The waveforms in Fig. 7 are the same as those in Figs. 4A and 4B and thus will not be described here.

The transmitter of the electromagnetic flow meter sends the accumulated value of a fluid flow as data of a transmission format shown in Fig. 9. In Fig. 9, data 2 is the reverse of data 1, and the number of characters to be sent is 20, the characters of information being used for sending the positive and negative of the accumulated value of a fluid flow. In addition, STX represents the start of text, ETX the end of text, ST the start bit, and SP the stop bit, the bit number of one character being 6.

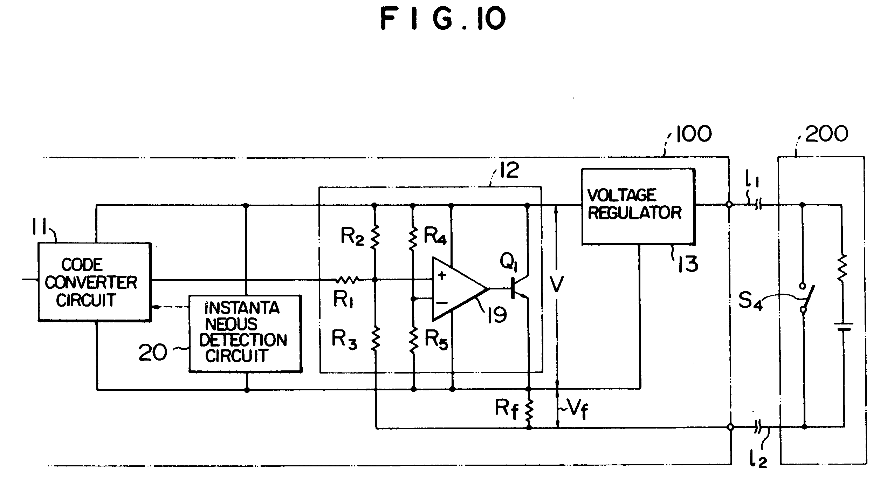

Fig. 10 shows a specific example of the base current setting circuit 12. The whole consumption current substantially flows through the resistor $R_f$, and the sum of the voltage $V_f$ developed across the resistor $R_f$ and the stabilized voltage V is divided by resistors $R_2$ and $R_3$. The potential at the junction between the resistors $R_2$ and $R_3$ is added to the output level from the code converter circuit 11 through a resistor $R_1$. The voltage resulting from the addition is applied to the noninverting input of an operational amplifier 19, while the voltage resulting from the division of the stabilized voltage V by resistors $R_4$ and $R_5$ is applied to the inverting input thereof. The collector current of a transistor $Q_1$ is controlled so that both the inputs are equal to each other, and as a result the current flowing through the resistor $R_f$, or substantially the current flowing in the transmission lines $I_1$ and $I_2$ is controlled. That is, the current in the transmission lines is controlled so as to maintain at 4 mA when the output of the code converter circuit 11 is of low level, and 10 mA when it is at high level. Thus, the accumulated value of a fluid flow in the so-called current modulated system is transmitted to the receiver 200 via the two transmission lines.

If a switch $S_4$ in the receiver 200 is closed during a short period of time to instantly make a short circuit between the two transmission lines, thereby to instantaneously reduce the output of a constant voltage source 13 to a low level and if the next voltage rise is detected by an instantaneous detection circuit 20 so as to start the code converter circuit 11 to produce a transmission signal, the signal code can be transmitted only when it is required by the receiver side.

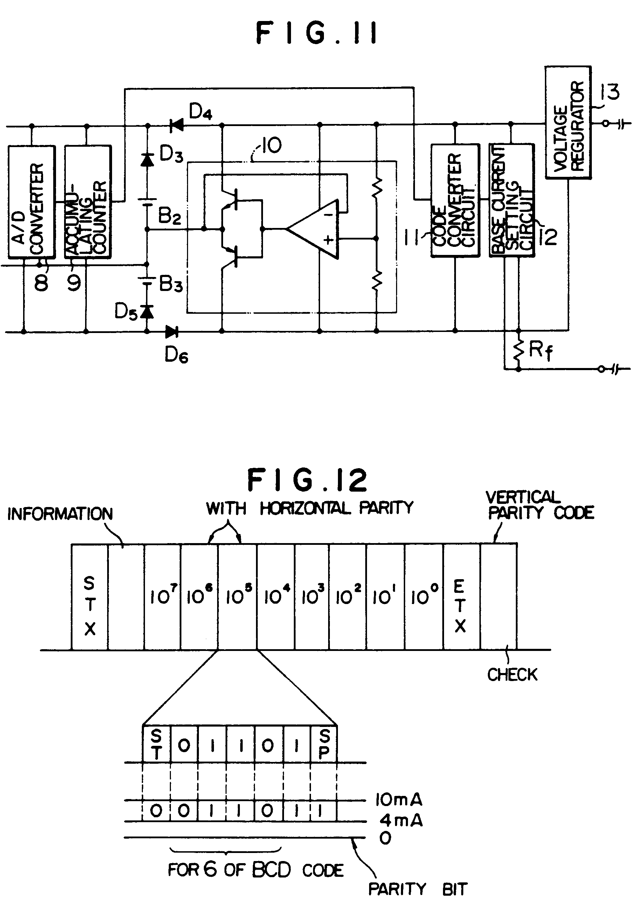

If two batteries $B_2$ and $B_3$ are used as shown in Fig. 11, as a battery back-up circuit (in Fig. 11, the function of measuring an amount of a fluid flow also backs up the battery) which measures the amount of a fluid flow in the transmitter 100 to prevent the accumulated value from being erased when an electric power to the receiver 200 is cut off, the voltage dividing circuit 10 can be prevented from being supplied with an electric power from the batteries $B_2$ and $B_3$. Thus, when an electric power to the receiver is cut off, the electric power consumption from the back-up battery for the electromagnetic flow measurement can be reduced by that in the voltage dividing circuit 10.

Fig. 12 shows another format of signal code with parity code.

As described above, according to the present invention, since the accumulated value in a form of code is transmitted on the two transmission lines, the transmission in a single mode becomes possible over the entire range of measurement without such a limitation of precision as to be seen in the conventional flow meter in which the instantaneous amount of a fluid flow is transmitted on 4 mA to 20 mA of an analog current signal. In addition, when an instantaneous amount of a fluid flow is necessary, the accumulated output is sent at constant time intervals from the transmitter of the electromagnetic flow meter, and each time a new data is received at the receiver, the preceding data is subtracted from the new data, thus the amount of a fluid flow being obtained. Furthermore, the accumulated value of a fluid flow in both forward and backward directions can be transmitted on two transmission lines. In addition, since at the transmitter the accumulated value is coded into current pulses, which are then transmitted, the effect noise from the external can be reduced. Even if error is temporarily caused in the received signal, the error is never accumulated at the receiver unlike the conventional flow meter. Moreover, since the change of range is not necessary, types of flow meters can be standardized.

With a battery incorporated in the electromagnetic flow meter, the accumulated value is not erased even when an electric power supply to the receiver is cut off.

## Claims

1. An electromagnetic flow meter comprising a transmitter (100) including electromagnetic measuring means that comprises a non-magnetic and electrically nonconductive tube path (1), through which an electrically conductive fluid flows in use, a pair of electrodes (2, 2') disposed, in use, in contact with the fluid in said tube path (1) and arranged opposite to each other in such a way that a line connecting the electrodes intersects the fluid flow, an exciting coil (3) for establishing magnetic flux at a portion where the fluid and the line connecting the electrodes intersect each other, an exciting circuit (4) for supplying an exciting current to said exciting coil (3) in forward and backward directions, thereby permitting an electromotive force Proportional to the magnetic flux thus generated and to the velocity of the fluid flow to be induced between said electrodes (2, 2'), a first differential amplifier (5) for amplifying the electromotive force induced between said electrodes (2, 2'), and a sampling circuit (7) for sampling the output voltage of said first differential amplifier and converting only the output voltage proportional to the fluid flow velocity to a $\underline{dc}$ voltage, for producing an instantaneous fluid flow velocity signal; a control circuit (6) for supplying timing pulses to said exciting circuit (4) and said sampling circuit (7); and a voltage regulator (13) for stabilizing the voltage supplied from said receiver ; a receiver (200), comprising an electric power supply ($V_o$) for supplying the electric power to said transmitter (100); and two transmission lines ($l_1$, $l_2$) through which said transmitter (100) is supplied with electric power from said receiver (200) and an electrical signal from said transmitter (100) is transmitted to said receiver (200), characterised in that the said exciting circuit (4) in operation supplies the said exciting current in the said forward and backward directions alternately; and in that the said transmitter (100) includes an A/D converter (8) for converting the output voltage from said sampling circuit to a number of pulses proportional to the fluid flow velocity, to which the control circuit (6) provides timing pulses; and accumulating means (9, 11, 12) for integrating the instantaneous fluid flow velocity value signal and for transforming the thus obtained integrated value into the form of a digitally coded current ($I_L$) corresponding to the electrical signal, wherein

said accumulating means (9, 11, 12) comprises an accumulating counter (9) and a code converter circuit (11); and that said transmitter comrises a base current setting circuit (12) for generating and controlling the digitally coded current ($I_L$) in accordance with the output of the code converter circuit;

a voltage dividing circuit (10) for supplying a neutral point voltage to said differential amplifier, said sampling circuit and said A/D converter;

and a internal power circuit means ($B_1$, $D_1$, $D_2$) for causing said transmitter to continue the measurement of the amount of fluid flow when the electric power to said receiver is cut off; and wherein the receiver (200) comprises resistance means ($R_i$) for converting the digitally coded current ($I_L$) to a coded voltage; a second differential amplifier (21) for amplifying said coded voltage; a receiver converter circuit (22) for taking out only the accumulated data from the output voltage from said second differential amplifier and storing it; an accumulating indicator (23) for displaying said accumulated data in a digital form; an instantaneous fluid flow amount indicator (24) for subtracting the accumulated data from the preceding accumulated data in said receiver converter circuit (22), converting the result to a digital instantaneous fluid flow amount and then displaying the digital instantaneous fluid flow amount; and a D/A converter (25) for converting said digital instantaneous fluid flow amount to an analog current,signal and sending it to an external instrument.

2. An electromagnetic flow meter according to claim 1, wherein said code converter circuit (11) converts the output signal from said accumulating counter to a digital transmission format in which a non-inverted code and its inverted code signal are successively transmitted or to a transmission format including a parity check code.

3. An electromagnetic flow meter according to claim 1, wherein said sampling circuit (7) comprises a first switch ($S_1$), a capacitor (C) connected on one side to the first switch ($S_1$) and on the other side to ground, an operational amplifier (16) having its inverting and non-inverting inputs connected to the one side of the capacitor (C), a comparator (15) having an input connected to the one side of the capacitor, and a second switch ($S_2$) arranged to be controlled by the comparator (15) and operative to connect the non-inverting input of the operational amplifier (16) to ground, the arrangement being such that the output voltage from said comparator (15) assumes a high level when the voltage held in said capacitor (c) is negative, thereby keeping the switch (S₂) in the closed state and grounding the non-inverting input terminal of said operational amplifier to invert the polarity of the sampled voltage.

**Patentansprüche**

1.   Elektromagnetischer Strömungsmesser mit einem Sender (100), der eine elektromagnetische Meßvorrichtung (1, 2, 2', 3-8) aufweist, bestehend aus

einer nichtmagnetischen und elektrisch nicht leitenden Röhre (1), durch die im Betrieb eine elektrisch leitende Flüssigkeit fließt,

zwei Elektroden (2, 2'), die, im Betrieb mit der Flüssigkeit in Kontakt stehend, innerhalb der Röhre (1) und einander gegenüberliegend derart angeordned sind, daß eine die Elektroden verbindende linie die Flüssigkeitsströmung schneidet,

einer Erregerspule (3), die in demjenigen Bereich einen magnetischen Fluß erzeugt, in dem die Flüssigkeit und die die Elektroden verbindende linie einander schneiden,

einer Erregerschaltung (4), die der Erregerspule (3) abwechselnd in Vorwärts- und Rückwärfsrichfung einen Erregerstrom zuführt, um zwischen den Elektroden (2, 2') die Induktion einer elektromotorischen Kraft zu erlauben, die proportional zu dem auf diese Weise erzeugten magnetischen Fluß sowie zur Strömungsgeschwindigkeit der Flüssigkeit ist,

einem ersten Differenzverstärker (5) zum Verstärken der zwischen den Elektroden (2, 2') induzierten elektromotorischen Kraft, und

einer Abtastschaltung (7) zum Abtasten der Ausgangsspannung des ersten Differenzverstärkers und zum alleinigen Umsetzen derjenigen Ausgangsspannung in eine Gleichspannung, die proportional zur Strömungsgeschwindigkeit der Flüssigkeit ist;

der eine Steuerschaltung (6) aufweist, um der Erregerschaltung (4) und der Abtastschaltung (7) Zeitimpulse zuzuführen;

der einen Spannungsregler (13) zum Stabilisieren der von einen Empfänger (200) zugeführten Spannung aufweist, wobei der Empfänger (200) eine elektrische Stromversorgung (V₀) besitzt, um den Sender (100) mit elektrischem Strom zu versorgen; und

zwei Übertragungsleitungen (l₁, l₂) aufweist, über die der Sender (100) vom Empfänger (200) mit elektrischer Energie versorgt und über die vom Sender (100) ein elektrisches Signal zum Empfänger (200) übertragen wird, **dadurch gekennzeichnet,**

daß die Erregerschaltung (4) im Betrieb den Erregerstrom abwechselnd in Vorwärts- und Rückwärtsrichtung liefert;

daß der Sender (100) einen A/D-Umsetzer (8) zum Umsetzen der Ausgangsspannung der Abtastschaltung in eine zur Strömungsgeschwindigkeit der Flüssigkeit proportionale Zahl von Impulsen besitzt, zu denen die Steuerschaltung (6) Zeitimpulse liefert;

daß der Sender (100) eine Sammelspeichereinrichtung (9, 11, 12) aufweist zum Aufsummieren des der augenblicklichen Strömungsgeschwindigkeit enfsprechenden Werts und zum Unsetzen des derart erhaltenen Summenwerts in die Form eines digital codierten Stromes (I_L), der dem elektrischen Signal entspricht, wobei die Sammelspeichereinrichtung (9, 11, 12) einen speichernden Zähler (9) und eine Code-Umsetzerschaltung (11) aufweist;

daß der Sender (100) eine Basisstrom-Einstellschaltung (12) aufweist zum Erzeugen und Steuern des digital codierfen Stroms (I_L) in Übereinstimmung mit dem Ausgangssignal der Code-Umsetzerschaltung; eine Spannungsfeilerschaltung (10) aufweist, um dem Differenzverstärker, der Abtastschaltung und dem A/D-Umsetzer eine Nullpunktspannung zuzuführen; und

daß der Sender eine interne Stromversorgungsschaltung (B₁, D₁, D₂) aufweist, um zu bewirken, daß der Sender die Messung der durchgeflossenen Flüssigkeitsmenge auch dann fortsetzt, wenn die Stromversorgung zum Empfänger unterbrochen ist; und wobei der Empfänger (200)

einen Widerstand (Rᵢ) zum Umsetzen des digital codierten Stroms (I_L) in eine codierte Spannung, einen zweiten Differenzverstärker (21) zum Verstärken der codierten Spannung,

eine Empfangs-Umsetzerschalfung (22), die aus der Ausgangsspannung des zweiten Differenzverstärkers nur die aufsummierten Daten herausgreift und speichert,

eine Summenanzeige (23) zum Anzeigen der aufsummierten Daten in digitaler Form,

eine Augenblickswert-Durchflußmengenannzeige (24), die die aufsummierten Daten von den vorhergehenden aufsummierten Daten in der EmpfangsUmsetzerschaltung (22) subtrahiert, das Ergebnis in einen digitalen Durchflußmengen-Augenblickswert umsetzt und diesen anschließend anzeigt, und

einen D/A-Umsetzer (25) aufweist, um den digitalen Durchflußmengen-Augenblickswert in ein analoges Stromsignal umzusetzen und dieses einem externen Instrument zu senden.

2.   Elektromagnetischer Strömungsmesser nach Anspruch 1, **dadurch gekennzeichnet,** daß die Code-Umsetzerschaltung (11) das Ausgangssignal des speichernden Zählers entweder in ein digitales Obertragungsformat umsetzt, bei den ein nichtinvertierter Code und dessen invertiertes Codesignal aufeinanderfolgend übertragen werden, oder in ein Obertragungsformat umsetzt, das einen Code mit Paritätsprüfung aufweist.

3. Elektromagnetischer Strömungsmesser nach Anspruch 1, **dadurch gekennzeichnet**, daß die Abtastschaltung (7) einen ersten Schalter (S₁), einen auf der einen Seite mit dem ersten Schalter (S₁) und auf der anderen Seite mit Masse verbundenen Kondensator (C), einen Operationsverstärker (16), dessen invertierender und nichtinvertierender Eingang mit der einen Seite des Kondensators (C) verbunden ist, einen Komparator (15) mit einem mit der einen Seife des Kondensators verbundenen Eingang sowie einen zweiten Schalter (S₂) aufweist, der von dem Komparator (15) ansteuerbar ist und mit dem der nichtinvertierende Eingang des Operationsverstärkers (16) mit Masse verbindbar ist, wobei diese Anordnung derart beschaltet ist, daß die Ausgangsspannung des Komparators (15) dann einen hohen Pegel annimmt, wenn die von dem Kondensator (C) gehaltene Spannung negativ ist, wodurch der Schalter (S₂) im geschlossenen Zustand gehalten und der nichtinvertierende Eingang des Operationsverstärkers mit Masse verbunden wird, um die Polarität der abgetasteten Spannung zu invertieren.

**Revendications**

1. Débitmètre électromagnétique comprenant un émetteur (100) qui contient des moyens de mesure électromagnétiques comportant un conduit tubulaire (1) non magnétique et non électroconducteur, à travers lequel un fluide électroconducteur passe en service, une paire d'électrodes (2, 2') disposées, en service, en contact avec le fluide dans ledit conduit tubulaire (1) et disposées en face l'une de l'autre de telle manière qu'une ligne reliant les électrodes coupe le courant de fluide, une bobine d'excitation (3) pour créer un flux magnétique dans une sone où le fluide et la ligne reliant les électrodes se coupent, un circuit d'excitation (4) pour alimenter ladite bobine d'excitation (3) en courant d'excitation en sens direct et inverse, permettant ainsi qu'une force électromotrice proportionnelle au flux magnétique ainsi créé et à la vitesse d'écoulement du fluide soit induite entre les électrodes (2, 2'), un premier amplificateur différentiel (5) pour amplifier la force électromotrice induite entre lesdites électrodes (2, 2'), et un circuit d'échantillonnage (7) pour échantillonner la tension de sortie dudit premier amplificateur différentiel et ne convertir en une tension continue que la tension de sortie proportionnelle à la vitesse d'écoulement du fluide, de manière à produire un signal de vitesse instantanée d'écoulement du fluide; un circuit de commande (6) pour délivrer des impulsions d'horloge audit circuit d'excitation (4) et audit circuit d'échantillonnage (7); et un régulateur de tension (13) pour stabiliser la tension fournie par un récepteur; un récepteur (200), comprenant une alimentation électrique ($V_o$) pour alimenter ledit émetteur (100) en courant électrique; et deux lignes de transmission ($l_1$, $l_2$) par lesquelles ledit émetteur (100) est alimenté en courant électrique à partir dudit récepteur (200) et un signal électrique en provenance dudit émetteur (100) est transmis audit récepteur (200), caractérisé en ce qu'en service, ledit circuit d'excitation (4) délivre ledit courant d'excitation en sens alternativement direct et inverse; et en ce que ledit émetteur (100) contient un convertisseur analogique/numérique (8) pour convertir la tension de sortie dudit circuit d'échantillonnage en un nombre d'impulsions proportionnel à la vitesse d'écoulement du fluide, convertisseur auquel le circuit de commande (6) délivre des impulsions d'horloge; et des moyens cumulateurs (9, 11, 12) pour intégrer la signal de valeur instantanée de la vitesse d'écoulement du fluide et pour transformer la valeur intégrée ainsi obtenue sous la forme d'un courant codé numériquement ($I_L$) correspondant au signal électrique, lesdits moyens cumulateurs (9, 11, 12) comprenant un compteur totalisateur et un circuit convertisseur de code (11); et en ce que ledit émetteur comprend un circuit de réglage de courant de base (12) pour générer et commander le courant codé numériquement ($I_L$) en fonction du signal de sortie du circuit convertisseur de code; un circuit diviseur de tension (10) pour fournir une tension de point neutre à l'amplificateur différentiel, au circuit d'échantillonnage et au convertisseur analogique/numérique; et un circuit d'alimentation interne ($B_1$, $D_1$, $D_2$) pour faire en sorte que ledit émetteur continue la mesure de la grandeur d'écoulement de fluide lorsque l'alimentation électrique dudit récepteur est coupée; et dans lequel le récepteur (200) comprend des moyens à résistance ($R_i$) pour convertir le courant codé numériquement ($I_L$) en une tension codée; un second amplificateur différentiel (21) pour amplifier cette tension codée; un circuit convertisseur de récepteur (22) pour ne prélever que les données cumulées sur la tension de sortie dudit second amplificateur différentiel et les mémoriser; un indicateur cumulateur (23) pour afficher ces données cumulées sous forme numérique; un indicateur de grandeur instantanée de débit (24) pour soustraire les données cumulées des données cumulées précédentes dans ledit circuit convertisseur de récepteur (22), convertir le résultat en une grandeur numérique de débit instantané, puis afficher la grandeur numérique de débit instantané; et un convertisseur numérique/analogique (25) pour convertir cette grandeur numérique de débit instantané en un signal analogique de courant et l'envoyer à un instrument extérieur.

2. Débitmètre électromagnétique selon la revendication 1, dans lequel ledit circuit convertisseur de code (11) convertit le signal de sortie dudit compteur totalisateur en un format numérique de transmission dans lequel un code non inversé et son signal de code inversé sont transmis successivement, ou en un format de transmisssion contenant un code de contrôle de parité.

3. Débitmètre électromagnétique selon la revendication 1, dans lequel ledit circuit d'échantillonnage (7) comprend un premier interrupteur ($S_1$), un condensateur (C) relié d'un côté au premier interrupteur ($S_1$) et de l'autre côté à la terre, un amplificateur opérationnel (16) dont les entrées inverseuse et non inverseuse sont raccordées au premier côté du condensateur (C), un comparateur (15) dont une entrée est raccordée au premier côté du condensateur, et un second interrupteur ($S_2$) monté de manière à être commandé par le comparateur (15) et ayant pour fonction de relier à la terre l'entrée non inverseuse de l'amplificateur opérationnel (16), la disposition étant telle que la tension de sortie dudit comparateur (15) prenne un niveau haut lorsque la tension retenue dans ledit condensateur (C) est négative, ce qui maintient l'interrupteur ($S_2$) à l'état fermé et met à la terre la borne d'entrée non inverseuse dudit amplificateur opérationnel, pour inverser la polarité de la tension échantillonnée.

# F I G . I

# F I G . 2

# F I G . 3

# F I G. 4A

# F I G . 4B

EP 0 062 531 B2

# FIG.5

Q

$E_1$

$E_2$

$E_3$

STATE OF $S_3$  | ON |

OPERATION OF
ACCUMULATING
COUNTER (9)   UP-COUNT | DOWN-COUNT | UP-COUNT

→ TIME

# FIG.6

14

# F I G . 7

# F I G . 8

FLUID FLOW Q

$E_1$

$E_3$

$E_4$

OPERATION OF ACCUMULATING COUNTER (9)

UP-COUNT | DOWN-COUNT | UP-COUNT

→ TIME

# F I G . 9

DATA 1

DATA 2

| S T X | $10^7$ | $10^6$ | $10^5$ | $10^4$ | $10^3$ | $10^2$ | $10^1$ | $10^0$ | | $10^7$ | $10^6$ | $10^5$ | $10^4$ | $10^3$ | $10^2$ | $10^1$ | $10^0$ | E T X |

INFORMATION

| S T | 0 | 1 | 1 | 0 | S P |
| 0 | 0 | 1 | 1 | 0 | 1 |

10 mA
4 mA
0

FOR 6 OF BCD CODE

| S T | 1 | 0 | 0 | 1 | S P |
| 0 | 1 | 0 | 0 | 1 | 1 |

10 mA
4 mA
0

REVERSED BCD CODE

16

F I G. IO

# F I G . 11

# F I G . 12